(19) Europäisches Patentamt

European Patent Office

Office européen des brevets

(11) Publication number: **0 301 378 B1**

(12) EUROPEAN PATENT SPECIFICATION

(45) Date of publication of patent specification: **02.01.92**  (51) Int. Cl.⁵: **B60H 1/00**, G05G 9/08

(21) Application number: **88111591.9**

(22) Date of filing: **19.07.88**

(54) A control device for motor vehicle air-conditioning systems.

(30) Priority: **21.07.87 IT 5354087 U**

(43) Date of publication of application:
**01.02.89 Bulletin  89/05**

(45) Publication of the grant of the patent:
**02.01.92 Bulletin  92/01**

(84) Designated Contracting States:
**DE ES FR IT SE**

(56) References cited:
**EP-A- 0 125 976**
**FR-A- 2 444 294**

(73) Proprietor: **BORLETTI CLIMATIZZAZIONE S.r.l.**
**Frazione Masio, 24**
**I-10046 Poirino (Torino)(IT)**

(72) Inventor: **Baro, Sergio**
**Via Montelera 14/A**
**I-10040 Val Della Torre (Torino)(IT)**

(74) Representative: **Ouinterno, Giuseppe et al**
**c/o Jacobacci-Casetta & Perani S.p.A. Via**
**Alfieri, 17**
**I-10121 Torino(IT)**

## Description

The present invention relates to a control device for motor vehicle air-conditioning systems, comprising a support structure, a single control member supported by the structure for rotation about an axis of rotation and having an eccentric circular convex abutment surface which is coaxial with the axis of rotation of the control member, and a pair of rotatable members driven by the control member through respective transmission means each comprising a lever member articulated to the support structure and provided with an abutment surface adapted to cooperate with the convex abutment surface of the control member.

In motor vehicle air-conditiong systems, there is often a need to operate the different components of the air-conditioning system (for example, movable obturators associated with the air-flow ducts, heater valves, etc.) according to predetermined laws of movement. In particular, there is a need to keep one of the components in a particular fixed position, while another component associated therewith is moved, and vice versa. Currently, it is necessary to use separate controls for these components, with the result that the laws of movement are not usually respected if the control is carried out directly by the operator.

FR-A-2.444.294 discloses a control device with a control member having an eccentric circular convex abutment surface and only one eccentric pin which are adapted to cooperate respectively with abutment portions and with slots of two levers. The abutment portion of each lever is almost flattened and small and it is necessary to use an auxiliary abutment in order to block the lever when it is not driven by the eccentric pin.

The object of the present invention is to provide a device of the type specified at the beginning of the description, which enables the above problems to be overcome and which is simple and economical to produce.

According to the invention, this object is achieved by virtue of the fact that the control member comprises one pair of eccentric pins, and by virtue of the fact that each lever member comprises a circular concave abutment surface corresponding to the convex abutment surface of the control member and a guide portion corresponding to one of the eccentric pins, the convex abutment surface and one of the eccentric pins of the control member being adapted to cooperate alternatively with the concave abutment surface and the guide portion of a lever member for locking the lever member in position and for rotating it respectively, in order to effect the differential rotation of the rotatable members.

By virtue of these characteristics, it is possible to transmit movement to two or more components of the air-conditioning system with a predetermined law of movement by means of a single control member and, in particular, to keep one of the components in a fixed position and to move another of the components, and vice versa, by rotation of the control member.

Further advantages and characteristics of the device according to the invention will become clear from the following detailed description, provided purely by way of non-limiting example, with reference to the appended drawings, in which:

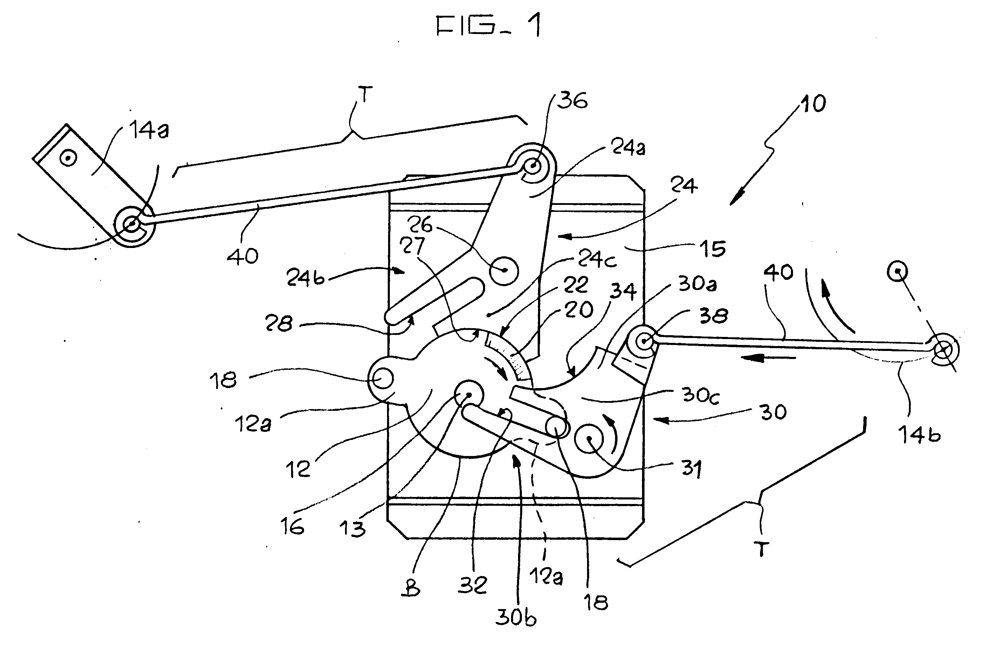

Figures 1-3 are schematic front views of a device according to the invention in three different operating conditions.

With reference to the drawings, a control device forming part of a motor vehicle air-conditioning system is generally indicated 10 and carries a control member 12 adapted for transmitting movement to a pair of rotatable members 14a, 14b through transmission means T.

The control member 12 is supported by a support structure 15 for rotation about an axis 13 and is driven through a keyed pin 16 by a manually-operated control lever or a geared motor (not illustrated).

The control member 12 has a disc-like conformation with a peripheral edge B and two radial appendages 12a in correspondence with which are fixed eccentric pins 18 whose axes are substantially parallel to the axis 13 of the control member 12. The control member 12 has an axial arc-like curved appendage 20 in correspondence with its edge B, defining a convex curved surface 22 coaxial with the axis 13 of the control member 12.

The transmission means T associated with the first rotatable member 14a (for example, a control lever associated with a shutter for choking or closing a duct of the air-conditioning system) comprise a lever member 24 articulated at 26 to the support structure 15 and comprising a first arm 24a, a second arm 24b, and an abutment portion 24c defining a concave curved surface 27 complementary to the convex curved surface 22 of the control member 12. The second arm 24b of the lever member 24 is provided with a guide slot 28 which is complementary in shape to one of the eccentric pins 18.

Similarly, the transmission means T for rotating the second rotatable member 14b comprise a second lever member 30 articulated at 31 to the support structure 15 and provided with a first arm 30a, a second arm 30b in which a guide 32 for one of the eccentric pins 18 is formed, and an abutment portion 30c defining a concave curved surface 34 complementary to the convex curved surface 22 of the control member 12. The first arm 24a and the first arm 30a of the respective lever members 24 and 30 are articulated at 36 and 38 respectively to control shafts 40 connected respectively to the first and second rotatable members 14a and 14b.

In the condition illustrated in Figure 1, the clockwise rotation of the control member 12 causes the anticlockwise rotation of the second lever member 30 through the engagement of the eccentric pin 18 in the respective guide 32, and consequently the clockwise rotation of the second rotatable member 14b through the control shaft 40. At this stage, the engagement, with relative sliding, between the convex curved surface 22 and the concave curved surface 27 of the first lever member 24 keeps the latter in a fixed position and hence the first rotatable member 14a is also not subjected to any movement.

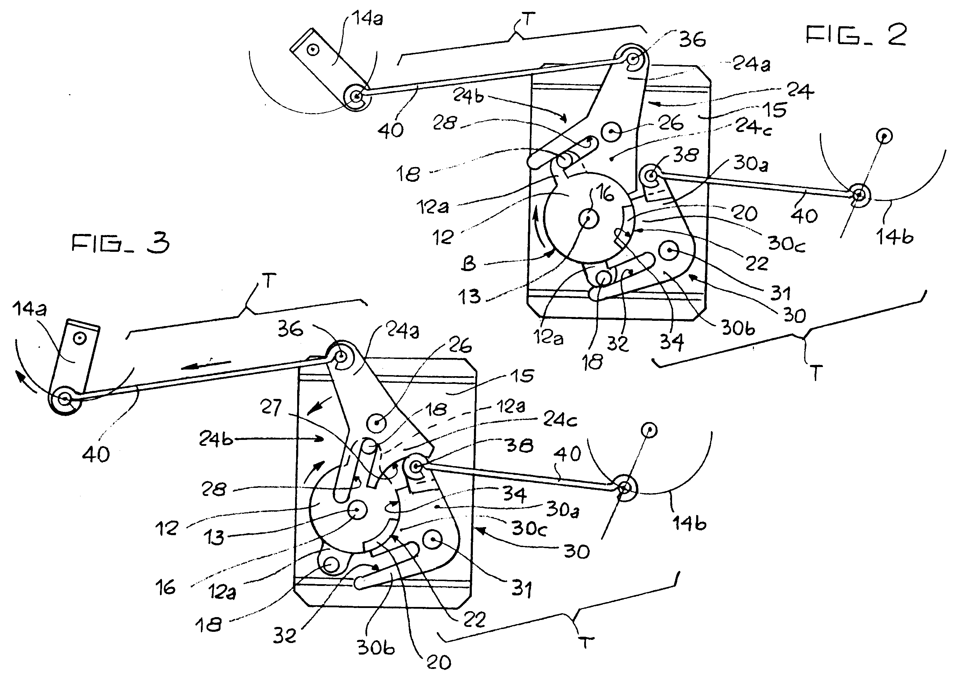

The condition of the device 10 illustrated in Figure 2 relates to the transitory stage in which the second lever member 30 stops rotating in an anticlockwise sense as a result of both the disengagement of the eccentric pin 18 from the guide slot 32 and of the engagement between the convex curved surface 22 and the concave curved surface 34. The engagement between the eccentric pin 18 and the guide 28 of the first lever member 24 and the simultaneous disengagement of the convex curved surface 22 from the concave curved surface 27 prepares for the anticlockwise rotation of the first lever member 24, as illustrated in Figure 3.

In the condition illustrated in Figure 3, the engagement between the eccentric pin 18 and the guide 28 actually causes the anticlockwise rotation of the first lever member 24 and consequent clockwise rotation of the first movable member 14a by means of the thrust of the shaft 40. The second lever member 30 is kept in a fixed position by the relative sliding engagement between the convex curved surface 22 of the control member 12 and the concave curved surface 34 of the lever member itself, and consequently the second movable member 14b is also held fast.

It is clear that the operation of the device 10 is entirely analogous if the sense of rotation of the control member 12 is reversed.

It is possible to provide for the use of a larger number of lever members controlled by a larger number of pins than those described and illustrated by way of example.

## Claims

1. A control device for motor vehicle air-conditioning systems, comprising a support structure (15), a single control member (12) supported by the structure for rotation about an axis of rotation (13) and having an eccentric circular convex abutment surface (22) which is coaxial with the axis of rotation of the control member, and a pair of rotatable members (14a, 14b) driven by the control member through respective transmission means (T) each comprising a lever member (24/30) articulated to the support structure and provided with an abutment surface (27/34) adapted to cooperate with the convex abutment surface (22) of the control member, characterised in that the control member (12) comprises one pair of eccentric pins (18) and in that each lever member (24, 30) comprises a circular concave abutment surface (27, 34) corresponding to the convex abutment surface (22) of the control member (12) and a guide portion (28, 32) corresponding to one of the eccentric pins (18), the convex abutment surface (22) and one of the eccentric pins (18) of the control member (12) being adapted to cooperate alternatively with the concave abutment surface (27, 34) and with the guide portion (28, 32) of a lever member (24, 30) for blocking the lever member (24, 30) in position and for rotating it respectively, in order to effect the differential rotation of the rotatable members (14a, 14b).

2. A device according to Claim 1, characterised in that the rotatable control member (12) has a disc-like conformation with an axial appendage (20) substantially in correspondence with the edge (B) of the disc (12), defining the convex curved surface (22).

3. A device according to Claim 2, characterised in that the eccentric pins (18) are arranged in substantially diametrally opposite positions with respect to the axis of rotation (13) of the control member (12).

4. A device according to any one of the preceding claims, characterised in that each lever element (24, 30) has a first arm (24a, 30a) which is adapted to be connected to a respective rotatable member (14a, 14b) of the air-conditioning system, and a second arm (24b, 30b) having a slot (28, 32) defining the guide portion in which the corresponding eccentric pin (18) is intended to slide.

## Revendications

1. Dispositif de commande pour systèmes de conditionnement d'air de véhicule à moteur, comportant une structure de support (15), un élément de commande unique (12) supporté par la structure afin de tourner autour d'un axe de rotation (13) et ayant une surface de butée convexe circulaire excentrique (22) qui est coaxiale à l'axe de rotation de l'élément de commande, et une paire d'éléments rotatifs (14a, 14b) entraînés par l'élément de commande par l'intermédiaire de moyens de transmission respectifs (T) comportant chacun un élément de levier (24, 30) articulé sur la structure de support et pourvu d'une surface de butée (27, 34) prévue pour coopérer avec la surface de butée convexe (22) de l'élément de commande, caractérisé en ce que l'élément de commande (12) comporte une paire d'axes excentriques (18) et en ce que chaque élément de levier (24, 30) comporte une surface de butée concave circulaire (27, 34) correspondant à la surface de butée convexe (22) de l'élément de commande (12) et une partie de guidage (28, 32) correspondant à l'un des axes excentriques (18), la surface de butée convexe (22) et l'un des axes excentriques (18) de l'élément de commande (12) étant prévus pour coopérer alternativement avec la surface de butée concave (27, 34) et avec la partie de guidage (28, 32) d'un élément de levier (24, 30) respectivement destiné à bloquer l'élément de levier (24, 30) en position et à le faire tourner, afin d'effectuer la rotation différentielle des éléments rotatifs (14a, 14b).

2. Dispositif de commande selon la revendication 1, caractérisé en ce que l'élément de commande rotatif (12) possède une conformation en forme de disque avec un appendice axial (20) sensiblement en correspondance avec le bord (B) du disque (12), définissant la surface de butée convexe (22).

3. Dispositif de commande selon la revendication 2, caractérisé en ce que les axes excentriques (18) sont disposés dans des positions sensiblement diamétralement opposées par rapport à l'axe de rotation (13) de l'élément de commande (12).

4. Dispositif de commande selon l'une quelconque des revendications précédentes, caractérisé en ce que chaque élément de levier (24, 30) possède un premier bras (24a, 30a) qui est prévu pour être relié à un élément rotatif respectif (14a, 14b) du système de conditionnement d'air, et un deuxième bras (24b, 30b) ayant une fente (28, 32) définissant la partie de guidage dans laquelle l'axe excentrique correspondant (18) est prévu pour coulisser.

**Patentansprüche**

1. Steuerungsvorrichtung für Kraftfahrzeug-Klimaanlagen, mit einer Tragkonstruktion (15), mit einem an dieser Tragkonstruktion gelagerten und um eine Rotationsachse (13) drehbaren einzelnen Steuerglied (12), das eine exzentrische kreisbogenförmige konvexe, zur Rotationsachse des Steuerglieds koaxiale Anschlagfläche (22) aufweist, sowie mit einem Paar von drehbaren Elementen (14a, 14b), die von dem Steuerglied über entsprechende Transmissionsmittel (T) angetrieben werden und jeweils ein an der Tragkonstruktion angelenktes Hebelelement (24, 30) umfassen, das mit einer Anschlagfläche (27, 43) für das Zusammenwirken mit der konvexen Anschlagfläche (22) des Steuerglieds ausgestattet ist, dadurch gekennzeichnet, daß das Steuerglied (12) ein Paar exzentrischer Stifte (18) besitzt und daß jedes Hebelelement (24, 30) eine mit der konvexen Anschlagfläche (22) des Steuerglieds (12) korrespondierende kreisbogenförmige konkave Anschlagfläche (27, 34) sowie einen mit einem der exzentrischen Stifte (18) korrespondierenden Führungsabschnitt (28, 32) aufweist, wobei die konvexe Anschlagfläche (22) und einer der exzentrischen Stifte (18) des Steuerglieds (12) zum Blockieren des Hebelelements (24, 30) in seiner Position bzw. zum Drehen des Hebelelements (24, 30) abwechselnd mit der konkaven Anschlagfläche (27, 34) und mit dem Führungsabschnitt (28, 32) eines Hebelelements (24, 30) zusammenwirken können, um die Differentialdrehung der r drehbaren Elemente (14a, 14b), zu bewirken.

2. Vorrichtung nach Anspruch 1, dadurch gekennzeichnet, daß das drehbare Steuerglied (12) als Scheibe ausgebildet ist und einen axialen Ansatz (20) besitzt, der im wesentlichen im Bereich der Kante (B) der Scheibe (12) angeordnet ist und die konvex gekrümmte Anschlagfläche (22) bestimmt.

3. Vorrichtung nach Anspruch 2, dadurch gekennzeichnet, daß die exzentrischen Stifte (18) relativ zur Rotationsachse (13) des Steuerglieds (12) in im wesentlichen einander diametral entgegengesetzten Positionen angeordnet sind.

4. Vorrichtung nach einem der vorhergehenden Ansprüche, dadurch gekennzeichnet, daß jedes Hebelelement (24, 30) einen ersten Arm (24a, 30a) besitzt, der mit einem entsprechenden drehbaren Element (14a, 14b) der Klimaanlage verbindar ist, und einen zweiten Arm (24b, 30b) mit einem Schlitz (28, 32), der den Führungsabschnitt begrenzt, in dem der zugeordnete exzentrische Stift (18) gleitet.

FIG_1

FIG. 2

FIG. 3

EP 0 301 378 B1